# EUROPÄISCHE PATENTANMELDUNG

(11) **EP 2 169 318 A2**
(43) Veröffentlichungstag der Anmeldung: **31.03.2010**
(21) Anmeldenummer: 09011630.2
(22) Anmeldetag: 11.09.2009
(51) Int. Cl.: F24D 11/02, F24D 12/02, F24D 19/10

(54) **Verfahren zum Betreiben einer Einrichtung zur Beheizung eines Gebäudes und Bereitung von Warmwasser**

(30) Priorität: 30.09.2008 AT 15142008
(71) Anmelder: Drexel und Weiss Energieeffiziente Haustechniksysteme GmbH, 6960 Wolfurt (AT)
(72) Erfinder: Drexel, Christof, 6922 Wolfurt (AT)
(74) Vertreter: Hofmann, Ralf U.

(57) **Zusammenfassung**

Bei einem Verfahren zum Betreiben einer Einrichtung zur Beheizung eines Gebäudes und Bereitung von Warmwasser, die eine Wärmepumpe mit einem Kältemittelkreislauf aufweist, wird ein vom Kondensator-Wärmetauscher (3) der Wärmepumpe erwärmtes und durch eine vom Kondensator-Wärmetauscher (3) abgehende Abführleitung (12) strömendes Heizmedium in einem ersten Betriebszustand mittels einer Ventileinrichtung (13, 14) einer Heizungs-Vorlaufleitung (15) und in einem zweiten Betriebszustand mittels der Ventileinrichtung (13, 14) einer Boiler-Vorlaufleitung (16) zugeführt. Zur Bereitstellung eines Teillastbetriebes der Beheizung des Gebäudes ist ein dritter Betriebszustand vorgesehen, in dem bei stillgelegtem Verdichter (2) der Wärmepumpe das Heizmedium mittels der Ventileinrichtung (13, 14) zum Teil der Heizungs-Vorlaufleitung (15) und zum Teil der Boiler-Vorlaufleitung (16) zugeführt wird. (Fig.)

## Beschreibung

Die Erfindung bezieht sich auf ein Verfahren zum Betreiben einer Einrichtung zur Beheizung eines Gebäudes und Bereitung von Warmwasser, die eine Wärmepumpe mit einem Kältemittelkreislauf aufweist, welcher einen Verdampfer-Wärmetauscher, der einen Verdampfer für ein Kältemittel bildet, einen Verdichter, mindestens einen Kondensator-Wärmetauscher, der einen Kondensator für das Kältemittel bildet, und eine Expansionsventil umfasst, wobei in einem ersten Betriebszustand ein vom Kondensator-Wärmetauscher erwärmtes und durch eine vom Kondensator-Wärmetauscher abgehende Abführleitung strömendes Heizmedium mittels einer Ventileinrichtung einer Heizungs-Vorlaufleitung zugeführt wird, über welche es in Heizkreise zur Beheizung des Gebäudes und weiter in eine Rückführleitung zur Rückführung zum Kondensator-Wärmetauscher strömt, und in einem zweiten Betriebszustand das vom Kondensator-Wärmetauscher erwärmte und durch die vom Kondensator-Wärmetauscher abgehende Abführleitung strömende Heizmedium mittels der Ventileinrichtung einer Boiler-Vorlaufleitung zugeführt wird, durch welche es durch einen Boiler zur Bereitung von Warmwasser und weiter in die Rückführleitung zur Rückführung zum Kondensator-Wärmetauscher strömt.

Weiters bezieht sich die Erfindung auf eine Einrichtung zur Beheizung eines Gebäudes und Bereitung von Warmwasser, umfassend eine Wärmepumpe mit einem Kältemittelkreislauf, welche einen Verdampfer-Wärmetauscher, der einen Verdampfer für ein Kältemittel bildet, einen Verdichter, mindestens einen Kondensator-Wärmetauscher, der einen Kondensator für das Kältemittel bildet, und ein Expansionsventil aufweist, eine Abführleitung zur Abführung eines Heizmediums nach seinem Durchlauf durch den Kondensator-Wärmetauscher, eine Heizungs- Vorlaufleitung zur Zuführung des Heizmediums zu Heizkreisen zur Beheizung des Gebäudes, eine Boiler-Vorlaufleitung zur Zuführung des Heizmediums zu einem Boiler, eine Ventileinrichtung, mit der das Heizmedium wahlweise von der Abführleitung in die Heizungs-Vorlaufleitung oder in die Boiler-Vorlaufleitung führbar ist, und eine Rückführleitung zur Rückführung des Heizmediums zum Kondensator-Wärmetauscher sowohl nach einem Durchlauf durch mindestens einen der Heizkreise als auch nach einem Durchlauf durch den Boiler.

Eine Einrichtung zur Beheizung eines Gebäudes, zur Bereitung von Warmwasser und weiters zur Belüftung des Gebäudes ist aus der EP 1 731 846 A1 bekannt. Zur Verdampfung des Kältemittels der Wärmepumpe im Verdampfer-Wärmetauscher dient ein Wärmeträgermedium, das in einem Wärmeträgermedium-Kreislauf umläuft und dem in einem Erdwärmetauscher Erdwärme zuführbar ist. Zur Belüftung des Gebäudes dienen ein Zuluft- und ein Abluft-Ventilator zur Förderung der in das Gebäude einzubringenden Zuluft und der aus dem Gebäude abzuführenden Abluft. Mittels eines Luft-Wärmetauschers ist Wärme von der Abluft auf die Zuluft übertragbar. Zur Bereitung von Warmwasser dient ein erster Kondensator-Wärmetauscher der Wärmepumpe, der von einer in einem Boiler angeordneten Heizschlange gebildet wird. Zur Beheizung des Gebäudes sind ein zweiter und ein dritter Kondensator-Wärmetauscher der Wärmepumpe vorgesehen. Mittels des zweiten Kondensator-Wärmetauschers, der durch einen Bypass auch umgehbar ist, kann die Zuluft nacherwärmt werden. Mittels des dritten Kondensator-Wärmetauschers kann ein in einem Heizkreis umlaufendes Heizmedium erwärmt werden.

Daneben sind auch bereits Einrichtungen der eingangs genannten Art bekannt geworden, bei denen zur Bereitung von Warmwasser und zur Beheizung des Gebäudes nicht getrennte Kondensator-Wärmetauscher vorhanden sind sondern ein gemeinsamer KOndensator-Wärmetauscher eingesetzt wird. Das durch diesen Kondensator-Wärmetauscher durchgeführte Heizmedium kann mittels einer Ventileinrichtung wahlweise entweder einem Boiler oder den Heizkreisen zur Beheizung des Gebäudes zugeführt werden.

Nachteilig bei einer solchen vorbekannten Einrichtung der eingangs genannten Art ist es, dass für die Beheizung des Gebäudes keine Teillasten zapfbar sind. In Übergangszeiten zwischen der Heizperiode und der heizfreien Periode wäre die Bereitstellung eines Teillastbetriebes, bei dem nicht alle Heizkreise betrieben werden, z.B. nur ein Heizkreis zur Beheizung eines Bades betrieben wird, wünschenswert.

Bekannt sind weiters Wärmepumpen-Einrichtungen zur Beheizung und Bereitung von Warmwasser, bei denen ein Pufferspeicher eingesetzt wird. Die dem Kondensator-Wärmetauscher der Wärmepumpe entzogene Wärme wird zur Aufheizung des Speicherwassers im Pufferspeicher herangezogen. Die Heizkreise zur Beheizung des Gebäudes sind in diesem Fall an den Pufferspeicher angeschlossen. Zudem erfolgt die Warmwasserbereitung durch das aufgeheizte Speicherwasser des Pufferspeichers, meist durch einen in den Pufferspeicher integrierten Boiler. Nachteilig ist es hierbei, dass mittels der Wärmepumpe das Speicherwasser im Pufferspeicher immer auf die für die Warmwasserbereitung erforderliche Temperatur aufgeheizt werden muss, während für die Heizkreise, wenn diese Niedertemperaturheizungen betreiben, ein niedrigeres Temperaturniveau ausreichend wäre, bei dem die Wärmepumpe einen höheren Wirkungsgrad erbringen kann. Weiters führt die größere Oberfläche des Puffers zwangsläufig zu mehr Verlusten.

Aufgabe der Erfindung ist es ein Verfahren bzw. eine Einrichtung der eingangs genannten Art bereitzustellen, bei dem bzw. bei der ein Teillastbetrieb der Beheizung des Gebäudes ermöglicht wird ohne dass ein Pufferspeicher, an den die Heizkreise zur Beheizung des Gebäudes angeschlossen sind, erforderlich ist. Erfindungsgemäß gelingt dies durch ein Verfahren mit den Merkmalen des Anspruchs 1 bzw. durch eine Einrichtung mit den Merkmalen des Anspruchs 8.

Beim Verfahren der Erfindung ist ein dritter Betriebszustand vorgesehen, in dem das Heizmedium über die Ventileinrichtung zum Teil der Heizungs-Vorlaufleitung und zum Teil der Boiler-Vorlaufleitung zugeführt wird, während die Wärmepumpe außer Betrieb ist. Dem Teil des Heizmediums, der durch die Heizungs-Vorlaufleitung und weiter durch mindestens einen Heizkreis strömt, wird im mindestens einen Heizkreis Wärme entzogen. Der andere Teil des Heizmediums strömt durch die Boiler-Vorlaufleitung in den Boiler. Das aus dem Boiler entsprechend herausströmende Heizmedium hat eine gegenüber dem in den Boiler einströmenden Heizmedium höheres Temperaturniveau, dem Boiler wird also Wärme entzogen. Dieses höhere Temperaturniveau wird entweder dadurch erreicht, dass dem Heizmedium vom im Boiler gespeicherten Warmwasser (welches zuvor, insbesondere mittels der Wärmepumpe, auf ein entsprechendes Temperaturniveau gebracht worden ist) Wärme zugeführt wird oder dass im Boiler zuvor, insbesondere mittels der Wärmepumpe, erwärmtes Heizmedium gespeichert worden ist. Sowohl der aus dem mindestens einen Heizkreis rückströmenden Teil des Heizmediums als auch der aus dem Boiler rückströmende Teil des Heizmediums werden der Rückführleitung zugeführt und mischen sich in dieser, wodurch sich eine entsprechende Mischtemperatur des zusammengeführten Heizmediums ergibt. Nach dem Durchlauf durch den Kondensator-Wärmetauscher der stillgesetzten Wärmepumpe (in dem somit das Temperaturniveau nicht verändert wird) erfolgt wiederum die Zufuhr mittels der Ventileinrichtung zum Teil zur Heizungs-Vorlaufleitung und zum Teil zur Boiler-Vorlaufleitung.

Es kann dadurch in einfacher Weise ein Teillastbetrieb der Heizung, beispielsweise für nur einen Raum des Gebäudes, bereitgestellt werden, ohne dass ein zusätzlicher Pufferspeicher erforderlich wäre, wobei die Wärme dem im ohnehin vorhandenen Boiler gespeicherten Warmwasser bzw. gespeicherten Heizmedium entzogen wird.

Daneben ist ein Betriebszustand vorhanden, bei dem das im Boiler gespeicherte Warmwasser bzw. das im Boiler gespeicherte Heizmedium erhitzt wird, indem das Heizmedium bei laufender Wärmepumpe durch den Kondensator-Wärmetauscher geführt wird, um ihm Wärme zuzuführen, und ist ein weiterer Betriebszustand vorhanden, bei dem das Gebäude beheizt wird, indem das Heizmedium, welches durch den Kondensator-Wärmetauscher der laufenden Wärmepumpe geführt wird, um ihm Wärme zu übertragen, im Weiteren durch die entsprechenden Heizkreise geführt wird.

Eine vorteilhafte Ausgestaltung des Verfahrens der Erfindung sieht vor, dass bei einem im Betrieb der Einrichtung im dritten Betriebszustand erfolgenden Absinken einer im Boiler gemessenen Temperatur und/oder einer am Heizmedium, das aus dem Boiler strömt, gemessenen Temperatur unter einen vorgegebenen oder einstellbaren unteren Grenzwert in den zweiten Betriebszustand gewechselt wird, bis ein vorgegebener oder einstellbarer oberer Grenzwert der Temperatur im Boiler bzw. des aus dem Boiler strömenden Heizmediums erreicht wird.

Bei einer Einrichtung gemäß der Erfindung ist vorgesehen, dass die Ventileinrichtung ein erstes Durchgangsventil, welches die das Heizmedium vom Kondensator-Wärmetauscher abführende Abführleitung im geöffneten Zustand mit der Heizungs-Vorlaufleitung verbindet, und ein zweites Durchgangsventil umfasst, welches die Abführleitung im geöffneten Zustand mit der Boiler-Vorlaufleitung verbindet. Diese Durchgangsventile sind von der Steuereinrichtung separat ansteuerbar. In einem ersten Betriebszustand ist zur Beheizung des Gebäudes das erste Durchgangsventil geöffnet und das zweite Durchgangsventil geschlossen. In einem zweiten Betriebszustand ist zur Bereitung von Warmwasser das erste Durchgangsventil geschlossen und das zweite geöffnet. In einem dritten Betriebszustand sind zur Beheizung des Gebäudes in einem Teillastbetrieb bei ausgeschalteter Wärmepumpe das erste und das zweite Durchgangsventil geöffnet. Hierbei wird vorzugsweise ein Teil der Heizkreise abgesperrt, sodass das Heizmedium durch die Heizungs-Vorlaufleitung nur in den nicht abgesperrten Teil der Heizkreise, beispielsweise nur in einen Heizkreis, gelangt.

Wenn im Rahmen dieser Schrift im Zusammenhang mit dem dritten Betriebszustand davon gesprochen wird, dass das erste und das zweite Durchgangsventil geöffnet sind, so soll damit auch ein etwaiges nur teilweises Öffnen von einem dieser Durchgangsventile oder auch beiden Durchgangsventilen umfasst sein. Beispielsweise könnte dadurch das Verhältnis der Flüsse des Heizmediums durch die Heizungs-Vorlaufleitung und durch die Boiler-Vorlaufleitung bestimmt werden, z.B. entsprechend der gewünschten Heizleistung.

Auch bei anderen als geöffnet bezeichneten Durchgangsventilen muss es sich nicht um eine maximale Öffnung des Durchgangsventils handeln, d.h. ein teilweises Öffnen soll gegebenenfalls mit umfasst sein. Durch ein solches teilweises Öffnen kann ein gewünschter Fluss einstellbar sein.

Die Bezeichnung "Durchgangsventil" wird im Rahmen dieser Schrift generell für ein Absperrorgan - mit oder ohne Regulierungsmöglichkeit des Durchflusses - bezeichnet. Durchgangsventile werden auch als 2/2-Wege-Ventile bezeichnet.

in einer vorteilhaften Ausführungsform der Erfindung sind im dritten Betriebszustand die absperrbaren Heizkreise sowohl mit ihren Heizkreis-Vorlaufleitungen als auch mit ihren Heizkreis-Rücklaufleitungen an Heizkreisverteiler angeschlossen. Der eine oder mehrere im Teillastbetrieb durchströmte Heizkreis ist mit seiner Vorlaufleitung oder mit seiner Rücklaufleitung unabhängig vom Heizkreisverteiler mit der Heizungs-Vorlaufleitung bzw. einer zur Rückführleitungen führenden Heizungs-Rücklaufleitung verbunden, wobei zwischen dieser Verbindung mit der Heizungs-Vorlaufleitung bzw. mit der Heizungs-Rücklaufleitung und dem entsprechenden Heizkreisverteiler ein drittes Durchgangsventil angeordnet ist, welches im ersten Betriebszustand geöffnet und im dritten Betriebszustand geschlossen ist.

Eine bevorzugte Ausführungsform der Erfindung sieht vor, dass durch den anderen Kanal des Verdampfer-Wärmetauschers der Wärmepumpe, durch dessen einen Kanal das Kältemittel geführt wird, zur Übertragung von Wärme auf das Kältemittel ein Wärmeträgermedium geführt wird, welches in einem Wärmeträgermedium-Kreislauf weiters durch einen Erdwärmetauscher geführt wird und in diesem Wärme aus dem Erdreich aufnimmt. Hierbei ist es vorteilhaft, wenn zusätzlich ein in der Heizungs-Vorlaufleitung angeordneter Kühl-Wärmetauscher vorgesehen ist, durch den einerseits das Heizmedium und andererseits in einem Kühl-Betriebszustand, in dem die Wärmepumpe stillgesetzt ist und das Heizmedium vollständig von der Abführleitung in die Heizungs-Vorlaufleitung geführt wird, das Wärmeträgermedium geführt wird. Im Kühl-Betriebszustand entzieht das Wärmeträgermedium im Kühl-Wärmetauscher dem Heizmedium Wärme und gibt im Erdwärmetauscher Wärme an das Erdreich ab. In den Betriebszuständen, in denen die Wärmepumpe läuft, so wie im dritten Betriebszustand wird das Wärmeträgermedium mittels einer Ventileinrichtung durch eine den Kühl-Wärmetauscher umgehende Bypassleitung geführt.

In einer vorteilhaften Ausführungsform der Erfindung ist die Einrichtung weiters zur Belüftung des Gebäudes ausgebildet, wobei sie einen Zuluft- und einen Abluft-Ventilator und einen Luft-Wärmetauscher zur Übertragung von Wärme von der Abluft- auf die Zuluft umfasst.

Ein Ausführungsbeispiel der Erfindung wird im Folgenden anhand der beiliegenden schematischen, symbolhaften Figur erläutert.

Die Einrichtung zur Beheizung des Gebäudes und zur Bereitung von Warmwasser, die im gezeigten Ausführungsbeispiel außerdem zur Belüftung des Gebäudes ausgebildet ist, umfasst eine Wärmepumpe mit einem Kältemittelkreislauf für eine Kältemittel. Der Kältemittelkreislauf verläuft durch den einen Kanal eines Verdampfer-Wärmetauschers 1, der den Verdampfer der Wärmepumpe bildet, durch den Kompressor bzw. Verdichter 2, durch den einen Kanal des Kondensator-Wärmetauschers 3, der den Kondensator der Wärmepumpe bildet, und durch das Expansionsventil 4.

Bei laufender Wärmepumpe, wenn der Verdichter 2 eingeschaltet ist, wird im Verdampfer-Wärmetauscher 1 vom Kältemittel Wärme eines durch den anderen Kanal des Verdampfer-Wärmetauschers 1 geführten Wärmeträgermediums aufgenommen. Das Wärmeträgermedium, vorzugsweise Sole, wird durch einen Wärmeträgermedium-Kreislauf mittels einer Umwälzpumpe 5 gefördert. Im Wärmeträgermedium-Kreislauf ist ein Erdwärmetauscher 6 vorgesehen, der im Erdreich angeordnet ist.

Im gezeigten Ausführungsbeispiel ist das Wärmeträgermedium weiters mittels einer Wärmeträgermedien-Ventileinrichtung 7 durch den einen Kanal eines Kühl-Wärmetauschers 8 führbar, dessen Funktion weiter unten noch genauer erläutert wird. Das Wärmeträgermedium kann mittels der Wärmeträgermedien-Ventileinrichtung 7 aber auch am Kühl-Wärmetauscher vorbeigeführt werden. Es wird dann ohne Durchführung durch den Kühl-Wärmetauscher 8 durch die diesem parallel geschaltete Bypassleitung 9 geführt.

Die Wärmeträgermedien-Ventileinrichtung ist von einer Steuereinrichtung 10 ansteuerbar und kann durch diese Ansteuerung selbsttätig umgeschaltet werden.

Im gezeigten Ausführungsbeispiel ist die Wärmeträgermedien-Ventileinrichtung 7 bezogen auf die Strömungsrichtung des Wärmeträgermediums nach dem Verdampfer-Wärmetauscher 1 angeordnet. Auch eine Anordnung vor dem Verdampfer-Wärmetauscher 1 ist möglich.

Durch den anderen Kanal des Kondensator-Wärmetauschers 3 ist ein flüssiges Heizmedium, insbesondere Wasser, geführt, welches von einer Umwälzpumpe 11 gefördert wird. Nach Verlassen des Kondensator-Wärmetauschers 3 strömt das Heizmedium durch eine Abführleitung 12 und kann von dieser mittels einer Ventileinrichtung, die ein erstes Durchgangsventil 13 und ein zweites Durchgangsventil 14 umfasst, einer Heizungs-Vorlaufleitung 15 oder einer Boiler-Vorlaufleitung 16 zugeführt werden. Die Durchgangsventile 13, 14 sind von der Steuereinrichtung 10 ansteuerbar und kann durch diese Ansteuerung selbsttätig umgeschaltet werden.

Der Boiler-Vorlaufleitung 16 zugeführtes Heizmedium strömt in einen Boiler 17 und das aus diesem austretende Heizmedium wird über eine Boiler-Rücklaufleitung 18 einer Rückführleitung 19 zugeführt, durch die es wiederum dem Kondensator-Wärmetauscher 3 zugeführt wird. Am Boiler 17 sind weiters eine Wasserzuführleitung 20, eine Wasserabführleitung 21 und ein Thermostat 22 angedeutet. Beim schematisch dargestellten Typ des Boilers 17 wird das Heizmedium durch eine im Boiler angeordnete Heizschlange geführt, um im Boiler gespeichertes Wasser zu erhitzen. Es könnte auch ein Boilertyp vorgesehen sein, bei dem aufgeheiztes Heizmedium im Boiler gespeichert wird und das Wasser durch Durchführen durch eine, üblicherweise spiralige, Leitung im Boiler 17 erhitzt wird. Dieser Boilertyp wird auch als "Spiro-Boiler" bezeichnet. Im ersten Fall kann über das Thermostat 22 die Temperatur des im Boiler 17 gespeicherten Warmwassers, im zweiten Fall die Temperatur des im Boiler 17 gespeicherten Heizmediums erfasst werden.

Anstelle einer Erfassung der Temperatur im Boiler 17 oder zusätzlich hierzu ist auch eine Erfassung der Temperatur des aus dem Boiler 17 austretenden Heizmediums durch ein entsprechend in der Boiler-Rücklaufleitung 18 angeordnetes Thermostat denkbar und möglich.

Der Heizungs-Vorlaufleitung 15 zugeführtes Heizmedium strömt durch einen ersten Abschnitt der Heizungs-Vorlaufleitung 15 in den anderen Kanal des Kühl-Wärmetauschers 8 und im Anschluss an diesen durch einen zweiten Abschnitt der Heizungs-Vorlaufleitung 15 in einen Vorlauf-Heizkreisverteiler 23. Von diesem gehen die Heizkreis-Vorlaufleitungen 24, 25 aus. Das in diese einströmende Heizmedium gibt in den Heizkörpern der einzelnen Heizkreise, welche vorzugsweise als Niedertemperaturheizungen bzw. Flächenheizungen ausgebildet sind, Wärme ab. Vorzugsweise liegt die Temperatur des durch die Heizkreise durchgeführten Heizmediums unterhalb von 45 °C.

Die zu den Heizkreis-Vorlaufleitungen 24 zugehörigen Heizkreis-Rücklaufleitungen 27 münden in den Rücklauf-Heizkreisverteiler 26. Dieser ist über ein drittes Durchgangsventil 29 mit der Heizungs-Rücklaufleitung 30 verbunden. Die zur Heizkreis-Vorlaufleitung 25 zugehörige Heizkreis-Rücklaufleitung 28 mündet direkt in die Heizungs-Rücklaufleitung 30. Das aus den entsprechenden Heizkreisen in die Heizungs-Rücklaufleitung 30 zurückströmende Heizmedium wird von dieser der Rückführleitung 19 zugeführt.

In der Rückführleitung 19 erfolgt somit ein Rückfluss sowohl von dem Boiler 17 als auch von den einzelnen Heizkreisen zugeführtem Heizmedium.

Die Umwälzpumpe 11 ist im gezeigten Ausführungsbeispiel in der Rückführleitung 19 angeordnet. Auch eine Anordnung in der Abführleitung 12 ist denkbar und möglich.

Im gezeigten Ausführungsbeispiel umfasst die Einrichtung weiters einen Zuluft-Ventilator 31, einen Abluft-Ventilator 32 und einen Luft-Wärmetauscher 33. Die vom Zuluft-Ventilator 31 geförderte Außenluft gelangt in den Abschnitt 34 der Zuluftleitung und nach dem Durchströmen des einen Kanals des Luft-Wärmetauschers 33 in den Abschnitt 35 der Zuluftleitung und von dort ins (in der Fig. nicht dargestellte) Gebäude. Der Abluft-Ventilator 32 fördert Abluft aus dem Gebäude durch den Abschnitt 36 der Abluftleitung und nach dem Durchströmen des anderen Kanals des Luft-Wärmetauschers 33 durch den Abschnitt 37 der Abluftleitung ins Freie. Wenn die aus dem Gebäude geförderte Abluft wärmer als die geförderte Außenluft ist, so geht Wärme von der Abluft auf die ins Gebäude geförderte Zuluft über, sodass in der Heizperiode Wärmeverluste durch die Belüftung des Gebäudes minimiert werden. Eine wie herkömmlich vorteilhaft vorzusehende Bypassleitung, über welche die Zuluft oder ein Teil hiervon am Luft-Wärmetauscher 33 mittels einer Ventileinrichtung vorbeigefördert werden kann, ist in der Fig. der Einfachheit halber nicht dargestellt. Auch für die Abluft ist ein Bypass denkbar und möglich.

Ein erster Betriebszustand, in dem die Einrichtung betrieben werden kann, dient zur Beheizung des Gebäudes. Hierbei ist die Wärmepumpe in Betrieb und das Wärmeträgermedium wird mittels der Umwälzpumpe 5 umgewälzt, wobei es von der Wärmeträgermedium-Ventileinrichtung über die Bypassleitung 9 am Kühl-Wärmetauscher 8 vorbeigeführt wird. Das erste Durchgangsventil 13 ist geöffnet und das zweite Durchgangsventil 14 geschlossen. Auch das dritte Durchgangsventil 29 ist geöffnet. Das Heizmedium, dem im Kondensator-Wärmetauscher 3 Wärme zugeführt wird, wird durch die Heizkreise geführt, um das Gebäude zu beheizen.

Ein zweiter Betriebsmodus, in dem die Einrichtung betrieben werden kann, dient zur Bereitung von Warmwasser im Boiler 17. Die Wärmepumpe läuft und der Wärmeträgermedium-Kreislauf wird wie im ersten Betriebszustand beschrieben betrieben. Das erste Durchgangsventil 13 ist geschlossen und das zweite Durchgangsventil 14 ist geöffnet. Das Heizmedium wird dem Boiler 17 zugeführt und aus dem Boiler 17 abfließendes Heizmedium wird zum Kondensator-Wärmetauscher 3 zurückgeführt.

Ein dritter Betriebszustand, in dem die Einrichtung betrieben werden kann, dient zur Beheizung des Gebäudes in einem Teillastbetrieb, insbesondere zur Beheizung von nur einem Teil der Räume, beispielsweise nur einem Raum des Gebäudes, z.B. einem oder mehreren Bädern. Die Wärmepumpe ist stillgesetzt. Auch die Umwälzpumpe 5 kann stillgesetzt sein (oder auch weiterlaufen). Jedenfalls wird kein Wärmeträgermedium durch den Kühl-Wärmetauscher 8 durchgeführt. Sowohl das erste Durchgangsventil 13 als auch das zweite Durchgangsventil 14 sind (zumindest teilweise) geöffnet. Das dritte Durchgangsventil 29 ist geschlossen. Durch die Abführleitung 12 gelangt ein Teil des Heizmediums in die Boiler-Vorlaufleitung 16 und ein Teil des Heizmediums in die Heizungs-Vorlaufleitung 15.

Das in die Heizungs-Vorlaufleitung 15 gelangende Heizmedium strömt weiter durch den mindestens einen nicht abgeschlossenen Heizkreis 25, 28, beispielsweise zur Beheizung eines Bades, in welchem es Wärme abgibt. Das in die Boiler-Vorlaufleitung 16 gelangende Heizmedium strömt in den Boiler 17 und das aus dem Boiler 17 abfließende Heizmedium wird durch die Boiler-Rücklaufleitung 18 mit dem durch die Heizungs-Rücklaufleitung 30 zugeführten Teil des Heizmediums zusammengeführt.

Bei einer ausreichend hohen Temperatur des Warmwassers im Boiler 17 bzw. des Heizmediums im Boiler 17, die höher als die des dem Boiler 17 zugeführten Teils des Heizmediums ist, ist hierbei dem Boiler 17 Wärme entzogen worden. Das durch die Boiler-Rücklaufleitung 18 strömende Heizmedium ist somit wärmer als das durch die Heizungs-Rücklaufleitung 30 strömende Heizmedium. In der Rückführleitung 19 stellt sich somit eine Mischtemperatur ein. Beispielsweise beträgt die Temperatur des durch die Boiler-Rücklaufleitung 18 strömenden Teils des Heizmediums 40°C und die Temperatur des aus der Heizkreis-Rücklaufleitung 28 rückströmenden Teils des Heizmediums 24°C. Die Mischtemperatur in der Rückführleitung 19 und damit auch in de r Abführleitung 12 liegt damit beispielsweise bei 35°C. Wenn diese Temperatur höher ist als die Raumtemperatur des vom Heizkreis 25, 28 zu heizenden Raumes und niedriger ist als die Temperatur im Boiler 17 wird eine Heizleistung aufgebracht. In dieser Weise kann beispielsweise eine Heizleistung im Bereich zwischen 500 und 1000 Watt aufgebracht werden. Mit sinkender Temperatur im Boiler 17 verringert sich die Heizleistung. Wenn die aufzubringende Heizleistung erhöht werden soll, wird in den zweiten Betriebszustand gewechselt, um die Temperatur im Boiler 17 zu erhöhen, bis die gewünschte Temperatur im Boiler 17 vorliegt.

Im gezeigten Ausführungsbeispiel kann die Einrichtung weiters in einem vierten Betriebszustand betrieben werden, um das Gebäude zu kühlen. Hierbei ist die Wärmepumpe stillgesetzt und das Wärmeträgermedium wird mittels der Umwälzpumpe 5 gefördert, wobei das Wärmeträgermedium mittels der Wärmeträgermedien-Ventileinrichtung 7 durch den Kühl-Wärmetauscher 8 geführt wird. Das erste Durchgangsventil 13 ist geöffnet und das zweite Durchgangsventil 14 ist geschlossen. Das dritte Durchgangsventil 29 ist ebenfalls geöffnet. Auf diese Weise wird eine Direktkühlung mittels des Wärmeträgermediums durchgeführt.

Falls dieser vierte Betriebsmodus nicht gewünscht ist, kann der Kühl-Wärmetauscher 8 entfallen. Weiters können in diesem Fall die Wärmeträgermedien-Ventileinrichtung 7 und die Bypassleitung 9 entfallen.

Im gezeigten Ausführungsbeispiel ist weiters ein Vor-Wärmetauscher 38 vorhanden, durch dessen einen Kanal das Kältemittel auf seinem Weg vom Kondensator-Wärmetauscher 3 zum Expansionsventil 4 geführt ist und durch dessen anderen Kanal die dem Luft-Wärmetauscher 33 zuzuführende Außenluft geführt ist. Dadurch kann bei unter dem Gefrierpunkt liegenden Außentemperaturen eine Vorerwärmung der Außenluft über den Gefrierpunkt erreicht werden.

Die Fig. ist der Übersichtlichkeit halber vereinfacht dargestellt. In herkömmlicher Weise eingesetzte Aggregate sind teilweise nicht dargestellt, so beispielsweise Ausdehnungsgefäße für das Heizmedium und das Wärmeträgermedium, Manometer, Thermometer und Absperrventile. Von der Steuereinrichtung 10 sind nur zu den beschriebenen Aggregaten durch strichlierte Linien dargestellte Steuerleitungen angedeutet.

Anstelle der separat vom Rücklauf-Heizkreisverteiler 26 in die Heizungs-Rücklaufleitung 30 mündenden mindestens einen Heizkreis-Rücklaufleitung 28 und des dazwischen angeordneten dritten Durchgangsventils 29 könnte auch die Heizkreis-Vorlaufleitung 25 dieses mindestens einen Heizkreises in vom Vorlauf-Heizkreisverteiler 23 räumlich getrennter Anordnung von der Heizungs-Vorlaufleitung 15 ausgehen und das dritte Durchgangsventil dort dazwischengeschaltet sein. Weiters könnten die im Teillastbetrieb des dritten Betriebsmodus nicht benötigten Heizkreise auch in anderer Weise absperrbar ausgebildet sein, beispielsweise durch ein jeweiliges in der Heizkreis-Vorlaufleitung 24 oder Heizkreis-Rücklaufleitung 27 angeordnetes steuerbares Durchgangsventil.

Weiters ist auch eine Ausbildung ohne Heizkreisverteiler 23, 26 denkbar und möglich, bei der im dritten Betriebszustand ein Teil der Heizkreise abgeschaltet ist.

Die Wärmepumpe könnte auch mehr als einen Kondensator-Wärmetauscher 3 aufweisen, über den Wärme entnommen wird.

Die Aggregate der Wärmepumpe, das erste und zweite Durchgangsventil 13, 14, die Steuereinrichtung 10 und, falls vorhanden, der Kühl-Wärmetauscher 8 mit der ihm zugeordneten Ventileinrichtung 7, die Belüftungsaggregate 31, 32, 33 und der Vor-Wärmetauscher 38 sind günstigerweise in einem gemeinsamen Gehäuse angeordnet, sodass eine mit den anderen Aggregaten verbindbare Einheit ausgebildet wird.

Zur Wärmezufuhr in den Boiler 17 kann beispielsweise auch eine Solaranlage eingebunden sein.

### Legende zu den Hinweisziffern:

- 1: Verdampfer-Wärmetauscher
- 2: Verdichter
- 3: Kondensator-Wärmetauscher
- 4: Expansionsventil
- 5: Umwälzpumpe
- 6: Erdwärmetauscher
- 7: Wärmeträgermedien-Ventileinrichtung
- 8: Kühl-Wärmetauscher
- 9: Bypassleitung
- 10: Steuereinrichtung
- 11: Umwälzpumpe
- 12: Abführleitung
- 13: erstes Durchgangsventil
- 14: zweites Durchgangsventil
- 15: Heizungs-Vorlaufleitung
- 16: Boiler-Vorlaufleitung
- 17: Boiler
- 18: Boiler-Rücklaufleitung
- 19: Rückführleitung
- 20: Wasserzuführleitung
- 21: Wasserabführleitung
- 22: Thermostat
- 23: Vorlauf-Heizkreisverteiler
- 24: Heizkreis-Vorlaufleitung
- 25: Heizkreis-Vorlaufleitung

- 26: Rücklauf-Heizkreisverteiler
- 27: Heizkreis-Rücklaufleitung
- 28: Heizkreis-Rücklaufleitung
- 29: drittes Durchgangsventil
- 30: Heizungs-Rücklaufleitung
- 31: Zuluft-Ventilator
- 32: Abluft-Ventilator
- 33: Luft-Wärmetauscher
- 34: Abschnitt der Zuluftleitung
- 35: Abschnitt der Zuluftleitung
- 36: Abschnitt der Abluftleitung
- 37: Abschnitt der Abluftleitung
- 38: Vor-Wärmetauscher

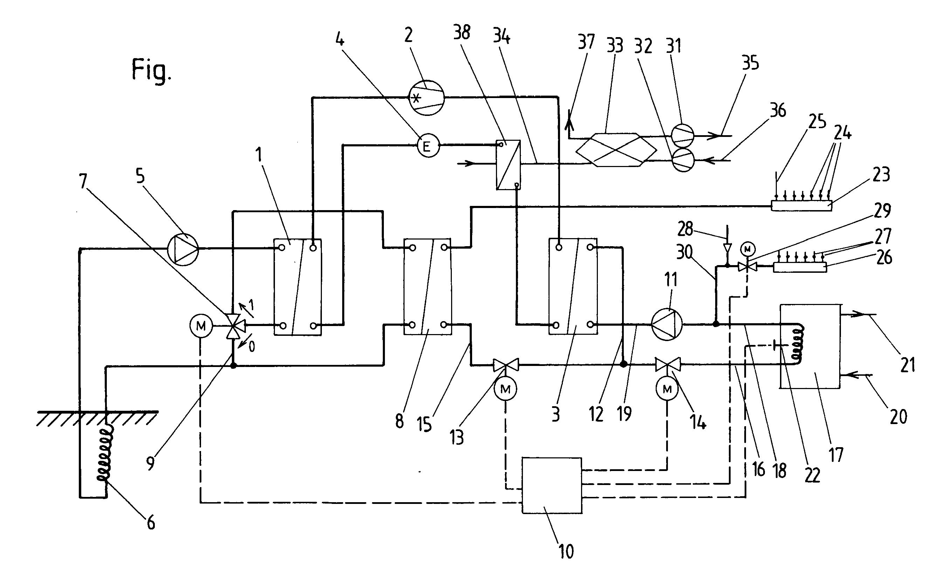

## Patentansprüche

1. Verfahren zum Betreiben einer Einrichtung zur Beheizung eines Gebäudes und Bereitung von Warmwasser, die eine Wärmepumpe mit einem Kältemittelkreislauf aufweist, welcher einen Verdampfer-Wärmetauscher (1), der einen Verdampfer für ein Kältemittel bildet, einen Verdichter (2), mindestens einen Kondensator-Wärmetauscher (3), der einen Kondensator für das Kältemittel bildet, und eine Expansionsventil (4) umfasst, wobei in einem ersten Betriebszustand ein vom Kondensator-Wärmetauscher (3) erwärmtes und durch eine vom Kondensator-Wärmetauscher (3) abgehende Abführleitung (12) strömendes Heizmedium mittels einer Ventileinrichtung (13, 14) einer Heizungs-Vorlaufleitung (15) zugeführt wird, über welche es in Heizkreise zur Beheizung des Gebäudes und weiter in eine Rückführleitung (19) zur Rückführung zum Kondensator-Wärmetauscher (3) strömt, und in einem zweiten Betriebszustand das vom Kondensator-Wärmetauscher (3) erwärmte und durch die vom Kondensator-Wärmetauscher (3) abgehende Abführleitung (12) strömende Heizmedium mittels der Ventileinrichtung (13, 14) einer Boiler-Vorlaufleitung (16) zugeführt wird, durch welche es durch einen Boiler (17) zur Bereitung von Warmwasser und weiter in die Rückführleitung (19) zur Rückführung zum Kondensator-Wärmetauscher (3) strömt, **dadurch gekennzeichnet, dass** zur Bereitstellung eines Teillastbetriebes der Beheizung des Gebäudes ein dritter Betriebszustand vorgesehen ist, in dem bei stillgelegtem Verdichter (2) der Wärmepumpe das Heizmedium mittels der Ventileinrichtung (13, 14) zum Teil der Heizungs-Vorlaufleitung (15) und zum Teil der Boiler-Vorlaufleitung (16) zugeführt wird, wobei sowohl der aus mindestens einem Heizkreis rückströmende Teil des Heizmediums als auch der aus dem Boiler (17) rückströmende Teil des Heizmediums der Rückführleitung (19) zugeführt werden und diese Teile des Heizmediums sich in der Rückführleitung (19) mischen.

2. Verfahren nach Anspruch 1, **dadurch gekennzeichnet, dass** bei einem im Betrieb der Einrichtung im dritten Betriebszustand erfolgenden Absinken einer im Boiler (17) gemessenen Temperatur und/oder einer am Heizmedium, das aus dem Boiler (17) strömt, gemessenen Temperatur unter einen vorgegebenen oder einstellbaren unteren Grenzwert in den zweiten Betriebszustand gewechselt wird, bis ein vorgegebener oder einstellbarer oberer Grenzwert der Temperatur im Boiler (17) bzw. des aus dem Boiler (17) strömenden Heizmediums erreicht wird.

3. Verfahren nach Anspruch 1 oder 2, **dadurch gekennzeichnet, dass** während des Betriebes der Einrichtung im dritten Betriebszustand ein Teil der Heizkreise abgesperrt wird.

4. Verfahren nach einem der Ansprüche 1 bis 3, **dadurch gekennzeichnet, dass** die Einrichtung weiters zur Belüftung des Gebäudes einen Zuluft- und einen Abluft-Ventilator (31, 32) zur Förderung von in das Gebäude einzubringender Zuluft und zur Förderung von aus dem Gebäude abzuführender Abluft und einen Luft-Wärmetauscher (33) zur Übertragung von Wärme von der Abluft auf die Zuluft umfasst.

5. Verfahren nach Anspruch 4, **dadurch gekennzeichnet, dass** dem Luft-Wärmetauscher (33) zuzuführende Außenluft vor der Zuführung zum Luft-Wärmetauscher (33) durch einen Vor-Wärmetauscher (38) geführt wird, durch den andererseits das Kältemittel der Wärmepumpe auf seinem Weg vom Kondensator-Wärmetauscher (3) zum Expansionsventil (4) geführt wird.

6. Verfahren nach einem der Ansprüche 1 bis 5, **dadurch gekennzeichnet, dass** durch den Verdampfer-Wärmetauscher (1) der Wärmepumpe zur Übertragung von Wärme auf das Kältemittel andererseits ein Wärmeträgermedium geführt wird, welches in einem Wärmeträgermedium-Kreislauf weiters durch einen Erdwärmetauscher (6) zur Aufnahme von Wärme aus dem Erdreich geführt wird.

7. Verfahren nach Anspruch 6, **dadurch gekennzeichnet, dass** zur Kühlung des Gebäudes weiters ein vierter Betriebszustand vorgesehen ist, in dem bei stillgelegtem Verdichter (2) der Wärmepumpe das Wärmeträgermedium des Wärmeträgermedium-Kreislaufes durch einen Kühl-Wärmetauscher (8) geführt wird, durch den andererseits das durch die Abfühleitung (12) strömende und mittels der Ventileinrichtung (13, 14) der Heizungs-Vorlaufleitung (15) zugeführte Heizmedium geführt ist, wobei im Kühl-Wärmetauscher (8) vom Wärmeträgermedium Wärme vom Heizmedium aufgenommen wird und im Erdwärmetauscher (6) an das Erdreich abgegeben wird.

8. Einrichtung zur Beheizung eines Gebäudes und Bereitung von Warmwasser, umfassend
eine Wärmepumpe mit einem Kältemittelkreislauf, der einen Verdampfer-Wärmetauscher (1), der einen Verdampfer für ein Kältemittel bildet, einen Verdichter (2), mindestens einen Kondensator-Wärmetauscher (3), der einen Kondensator für das Kältemittel bildet, und ein Expansionsventil (4) aufweist,
eine Abführleitung (12) zur Abführung eines Heizmediums nach seinem Durchlauf durch den Kondensator-Wärmetauscher,
eine Heizungs- Vorlaufleitung (15) zur Zuführung des Heizmediums zu Heizkreisen zur Beheizung des Gebäudes,
eine Boiler-Vorlaufleitung (16) zur Zuführung des Heizmediums zu einem Boiler (17), eine Ventileinrichtung (13, 14), mit der das Heizmedium wahlweise von der Abführleitung (12) in die Heizungs-Vorlaufleitung (15) oder in die Boiler-Vorlaufleitung (16) führbar ist, und
eine Rückführleitung (19) zur Rückführung des Heizmediums zum Kondensator-Wärmetauscher (3) sowohl nach einem Durchlauf durch mindestens einen der Heizkreise als auch nach einem Durchlauf durch den Boiler (17),
**dadurch gekennzeichnet, dass** die Ventileinrichtung ein die Abführleitung (12) mit der Heizungs-Vorlaufleitung (15) verbindendes erstes Durchgangsventil (13) und ein die Abführleitung (12) mit der Boiler-Vorlaufleitung (16) verbindendes zweites Durchgangsventil (14) umfasst, die separat ansteuerbar sind, wobei die Einrichtung einen ersten Betriebszustand, in dem zur Beheizung des Gebäudes das erste Durchgangsventil (13) geöffnet ist und das zweite Durchgangsventil (14) geschlossen ist, einen zweiten Betriebszustand, in dem zur Bereitung von Warmwasser das erste Durchgangsventil (13) geschlossen ist und das zweite Durchgangsventil (14) geöffnet ist, und einen dritten Betriebszustand aufweist, in dem zur Beheizung des Gebäudes in einem Teillastbetrieb bei stillgelegtem Verdichter (2) der Wärmepumpe das erste und das zweite Durchgangsventil (13, 14) geöffnet sind.

9. Einrichtung nach Anspruch 8, **dadurch gekennzeichnet, dass** an die Heizungs-Vorlaufleitung (15) ein Vorlauf-Heizkreisverteiler (23) angeschlossen ist, von dem mindestens ein Teil der Heizkreis-Vorlaufleitungen (24, 25) der einzelnen Heizkreise ausgehen, und an eine Heizungs-Rücklaufleitung (30), die in die Rückführleitung (19) mündet, ein Rücklauf-Heizkreisverteiler (26) angeschlossen ist, in den zumindest ein Teil der Heizkreis-Rücklaufleitungen (27, 28) münden, wobei mindestens eine Heizkreis-Vorlaufleitung (25) getrennt vom Vorlauf-Heizkreisverteiler (23) von der Heizungs-Vorlaufleitung (15) abzweigt und zwischen dieser Abzweigung und dem Vorlauf-Heizkreisverteiler (23) ein ansteuerbares drittes Durchgangsventil, welches im dritten Betriebszustand geschlossen ist, angeordnet ist oder mindestens eine Heizkreis-Rücklaufleitung (28) getrennt vom Rücklauf-Heizkreisverteiler (26) in die Heizungs-Rücklaufleitung (30) mündet und zwischen dieser Mündung und dem Rücklauf-Heizkreisverteiler (26) ein ansteuerbares drittes Durchgangsventil (29) angeordnet ist, welches im dritten Betriebszustand geschlossen ist.

10. Einrichtung nach Anspruch 8 oder 9, **dadurch gekennzeichnet, dass** die Einrichtung weiters zur Belüftung des Gebäudes einen Zuluft- und einen Abluft-Ventilator (31, 32) zur Förderung von in das Gebäude einzubringender Zuluft und zur Förderung von aus dem Gebäude abzuführender Abluft und einen Luft-Wärmetauscher (33) zur Übertragung von Wärme von der Abluft auf die Zuluft umfasst.

11. Einrichtung nach Anspruch 10, **dadurch gekennzeichnet, dass** dem Luft-Wärmetauscher (33) zuzuführende Außenluft vor der Zuführung zum Luft-Wärmetauscher (33) durch einen Vor-Wärmetauscher (38) geführt ist, durch den andererseits das Kältemittel der Wärmepumpe auf seinem Weg vom Kondensator-Wärmetauscher (3) zum Expansionsventil (4) geführt ist.

12. Einrichtung nach einem der Ansprüche 8 bis 11, **dadurch gekennzeichnet, dass** durch den Verdampfer-Wärmetauscher (1) der Wärmepumpe zur Übertragung von Wärme auf das Kältemittel andererseits ein Wärmeträgermedium geführt ist, welches in einem Wärmeträgermedium-Kreislauf weiters durch einen Erdwärmetauscher (6) zur Aufnahme von Wärme aus dem Erdreich führbar ist.

13. Einrichtung nach Anspruch 12, **dadurch gekennzeichnet, dass** eine Wärmeträgermedium-Ventileinrichtung (7) vorgesehen ist, mittels der das Wärmeträgermedium wahlweise entweder in einem vierten Betriebszustand einem in der Heizungs-Vorlaufleitung (15) angeordneten Kühl-Wärmetauscher (8) zuführbar ist oder in den ersten, zweiten und dritten Betriebszuständen einer den Kühl-Wärmetauscher (8) umgehenden Bypassleitung (9) zuführbar ist, wobei im vierten Betriebszustand bei stillgelegtem Verdichter (2) der Wärmepumpe das erste Durchgangsventil (13) geöffnet und das zweite Durchgangsventil (14) geschlossen ist.

14. Einrichtung nach Anspruch 13, **dadurch gekennzeichnet, dass** die Wärmeträgermedium-Ventileinrichtung (7) von einem 3/2-Wege-Ventil gebildet wird.
